# EUROPÄISCHE PATENTSCHRIFT

(11) **EP 3 114 537 B1**
(45) Veröffentlichungstag und Bekanntmachung des Hinweises auf die Patenterteilung: **24.07.2019**
(21) Anmeldenummer: 15714398.3
(22) Anmeldetag: 27.02.2015
(51) Int. Cl.: G05B 19/418

(54) **VERFAHREN ZUR WIEDERGABE EINES FERTIGUNGSPROZESSES IN EINER VIRTUELLEN UMGEBUNG**
METHOD FOR REPRESENTING A PRODUCTION PROCESS IN A VIRTUAL ENVIRONMENT
PROCÉDÉ POUR LA REPRÉSENTATION D'UN PROCÉDÉ DE FABRICATION DANS UN ENVIRONNEMENT VIRTUEL

(30) Priorität: 03.03.2014 DE 102014102773
(43) Veröffentlichungstag der Anmeldung: 11.01.2017
(73) Patentinhaber: DESTACO Europe GmbH, 61440 Oberursel (DE)
(72) Erfinder: SMITH, John, West Midlands B74 3LE (GB); MORGAN, Willian Duncan, Shropshire SY5 0BU (GB); BICKFORD, Andrew Neil, Oswestry SY10 8BN (GB)
(74) Vertreter: Wolf, Michael
(86) Internationale Anmeldenummer: PCT/DE2015/100079
(87) Internationale Veröffentlichungsnummer: WO 2015/131878

(56) Entgegenhaltungen:
- EP-A2- 1 701 233
- DE-A1- 10 128 015
- US-A1- 2006 241 791
- US-A1- 2012 290 130

## Beschreibung

Die Erfindung betrifft ein Verfahren zur Wiedergabe eines Fertigungsprozesses in einer virtuellen Umgebung gemäß dem Oberbegriff des Patentanspruchs 1.

Ein Verfahren zur Wiedergabe eines Fertigungsprozesses in einer virtuellen Umgebung, bei dem während des Fertigungsprozesses eine Fertigungseinrichtung und ein Werkstück in Interaktion miteinander gebracht werden und bei dem die virtuelle Umgebung aus zuvor errechneten dreidimensionalen Daten des Werkstücks erstellt wird, ist an sich bekannt.

Unter der oben verwendeten Formulierung "in Interaktion miteinander gebracht werden" ist dabei zu verstehen, dass die Fertigungseinrichtung und das Werkstück beim Fertigungsprozess im weitestens Sinne miteinander in Berührung kommen, wobei die Fertigungseinrichtung erforderlich ist, um mindestens einen Fertigungsschritt am Werkstück zu vollziehen.

Unter dem oben verwendeten Begriff "Wiedergabe" ist insbesondere die graphische Wiedergabe des Fertigungsprozesses auf einem Bildschirm bzw. Monitor zu verstehen, wobei die zum Fertigungsprozess gehörenden Teile wie Werkstück und Fertigungseinrichtung in einem dreidimensionalen Raum, nämlich der virtuellen Umgebung dargestellt werden. Alternativ kann man somit auch von einer Computersimulation sprechen, bei der der Fertigungsprozess nicht in Realität, sondern nur im Prozessor des Computers stattfindet.

Derartige Simulationen dienen unterschiedlichen Zwecken. Beispielsweise gibt es Fertigungsprozesse, bei denen man zunächst den gesamten Prozess, bevor man ihn in die Realität umsetzt, in einer virtuellen Realität simuliert, um zu prüfen, ob dieser wunschgemäß verlaufen würde. Es gibt aber auch Situationen, in denen in der virtuellen Umgebung ein bereits real existierender Fertigungsprozess dargestellt wird, wobei die Simulation dann zum virtuellen Austesten von Parameterveränderungen verwendet werden kann.

Voraussetzung für die Simulation ist dabei stets, dass die dreidimensionalen Daten des Werkstücks und der Fertigungseinrichtung in einer für den Computer verarbeitbaren Form vorliegen.

In der Theorie ist dies regelmäßig der Fall, denn sowohl das Werkstück also auch die Fertigungseinrichtung werden heutzutage bereits direkt am Computer entwickelt, woraus sich dann unmittelbar die dreidimensionalen Daten der genannten Bauteile ergeben.

In der Praxis ist dies regelmäßig aber nicht so einfach, und zwar insbesondere nicht in Bezug auf die vielteilige Fertigungseinrichtung, denn deren räumliche Gestaltung richtet sich regelmäßig nach dem Werkstück, wobei zu beachten ist, dass die tatsächliche räumliche Anordnung der vielen Einzelbauteile der Fertigungseinrichtung zueinander in einer virtuellen Umgebung aufgrund der erforderlichen Erfahrungswerte beim Anordnen mit einem erheblichen personellen Zeitaufwand verbunden ist.

Der Erfindung liegt demgemäß die Aufgabe zugrunde, ein Verfahren zur Wiedergabe eines Fertigungsprozesses der eingangs genannten Art zu verbessern, und zwar insbesondere hinsichtlich der Bereitstellung der dreidimensionalen Daten der Fertigungseinrichtung.

Diese Aufgabe ist mit einem Verfahren zur Wiedergabe eines Fertigungsprozesses der eingangs genannten Art durch die im Kennzeichen des Patentanspruchs 1 aufgeführten Merkmale gelöst.

Nach der Erfindung ist also vorgesehen, dass die virtuelle Umgebung - neben den errechneten dreidimensionalen Daten des Werkstücks - aus per Scanner erfassten, dreidimensionalen Daten einer real existierenden Fertigungseinrichtung erstellt wird, und die Fertigungseinrichtung vor ihrer Erfassung mit dem Scanner wahlweise an einem real existierenden Werkstück oder an einer optischen Projektion des Werkstücks orientiert aufgebaut wird.

Mit anderen Worten besteht die Erfindung darin, dass die dreidimensionalen Daten der tatsächlich erforderlichen, an das Werkstück angepassten Fertigungseinrichtung selbst nicht in einer virtuellen Welt, sondern mit einem so genannten 3D-Scanner, worauf noch genauer eingegangen wird, erzeugt werden. Hierzu wird die Fertigungseinrichtung zunächst ganz real aus einer Vielzahl von Einzelbauteilen zusammengestellt, und zwar räumlich orientiert am Werkstück.

Dabei besteht eine noch genauer zu erläuternde, vorteilhafte Weiterbildung des erfindungsgemäßen Verfahrens darin, dass das Werkstück selbst auf Basis seiner dreidimensionalen Daten als optische Projektion in einem Entwicklungsraum erzeugt wird. Die real existierende Fertigungseinrichtung wird dann an dieser Projektion ausgerichtet und an diese angepasst. Der besondere Vorteil dieser Vorgehensweise besteht dabei darin, dass der Abnehmer der Fertigungseinrichtung häufig das Werkstück selbst benötigt und dieses dementsprechend dem Hersteller der Fertigungseinrichtung nicht zur Verfügung stellen kann bzw. will. Über die Projektion ist es dem Hersteller der Fertigungseinrichtung aber gleichwohl möglich, die Fertigungseinrichtung ganz real anzupassen und aufzubauen, und zwar ohne dass ihm das Werkstück in Realität vorliegt.

Alternativ - also sofern das Werkstück in Realität vorliegt - kann die Fertigungseinrichtung aber auch am real existierenden Werkstück orientiert aufgebaut werden.

Entscheidend für beide Ansätze ist, dass dann, wenn die Fertigungseinrichtung tatsächlich existiert, diese mit einem 3D-Scanner räumlich gescannt bzw. vermessen wird, wobei dann die dabei ermittelten dreidimensionalen Daten der Fertigungseinrichtung der bereits aus dem Werkstück bestehenden virtuellen Umgebung zugeführt werden, so dass schließlich die gesamte virtuelle Umgebung bestehend aus Werkstück und Fertigungseinrichtung für die eingangs genannten Zwecke zur Verfügung steht.

Andere vorteilhafte Weiterbildung des erfindungsgemäßen Verfahrens ergeben sich aus den abhängigen Patentansprüchen.

Der Vollständigkeit halber wird noch auf folgenden Stand der Technik hingewiesen:
Aus dem Patentdokument DE 10 2005 009 437 A1 ist ein Verfahren bekannt (vgl. dort insbesondere Absatz [0063] und Figur 10), bei dem eine real existierende Fertigungseinrichtung (insbesondere ein Greifer) von einer Person mit Hilfe von virtuellen Elementargeometrien nachgebildet wird, um das so gebildete Objekt dann in einer virtuellen Umgebung nutzen zu können. Das erfindungsgemäße Verfahren unterscheidet sich hiervon insbesondere dadurch, dass die Fertigungseinrichtung (insbesondere ein Greifer) nicht von einer Person virtuell nachgebildet, sondern orientiert an dem mit der Fertigungseinrichtung zu handhabenden Werkstück individuell aufgebaut und anschließend für die Nutzung in der virtuellen Umgebung gescannt wird.

Aus dem Patentdokument DE 102 40 392 A1 ist ein Verfahren zur Vermessung nicht real existierender virtueller Objekte zu Objekten einer realen Umgebung bekannt. Auch hier findet sich kein Hinweis darauf, eine Fertigungseinrichtung orientiert an dem mit der Fertigungseinrichtung zu handhabenden Werkstück individuell aufzubauen und anschließend für die Nutzung in einer virtuellen Umgebung zu scannen.

Schließlich ist aus dem Patentdokument DE 10 2007 045 835 A1 ein Verfahren zum Darstellen eines virtuellen Objekts in einer realen Umgebung bekannt, mit dem sich auftretende Kollisionen von virtuellen Objekten mit realen Objekten bei der Vermischung mit einer realen Umgebung weitgehend realitätsnah darstellen lassen. Auch hier ist der erfindungsgemäße Ansatz nicht offenbart.

Weitere Verfahren zum Darstellen einer virtuellen Fertigungsumgebung, oder zur Wiedergabe eines Fertigungsprozesses in einer virtuellen Umgebung, sind aus den Patentschriften US 2012/290130 A1, EP 1 701 233 A2, DE 101 28 015 A1, und US 2006/241791 A1 bekannt.

Das erfindungsgemäße Verfahren einschließlich seiner vorteilhaften Weiterbildungen gemäß der abhängigen Patentansprüche wird nachfolgend anhand der zeichnerischen Darstellung zweier Ausführungsbeispiele näher erläutert.

Es zeigt (nicht maßstäblich)
- Figur 1: schematisch als Seitenansicht einen Teil einer Fertigungsstraße mit einer von einem Roboter betätigten, als Greifervorrichtung ausgebildeten Fertigungseinrichtung zum Entnehmen eines Werkstücks aus einer ersten Werkzeugvorrichtung und zum Zuführen des Werkstücks in eine zweite Werkzeugvorrichtung;
- Figur 2: schematisch als Draufsicht die als Greifervorrichtung ausgebildete Fertigungseinrichtung gemäß Figur 1 einschließlich eines Werkstücks;
- Figur 3: schematisch als Seitenansicht die Greifervorrichtung und den 3D-Scanner; und
- Figur 4: perspektivisch ein Werkstück (tiefgezogenes Blechteil) mit zwei Teilen einer Greifervorrichtung.

Die Figuren illustrieren anhand von zwei Beispielen Details des erfindungsgemäßen Verfahrens zur Wiedergabe eines Fertigungsprozesses in einer virtuellen Umgebung. Dieses Verfahren zeichnet sich zunächst in bekannter Weise dadurch aus, dass während des Fertigungsprozesses eine Fertigungseinrichtung 1 und ein Werkstück 2 in Interaktion miteinander gebracht werden, wobei die virtuelle Umgebung einerseits aus zuvor errechneten dreidimensionalen Daten des Werkstücks 2 erstellt wird.

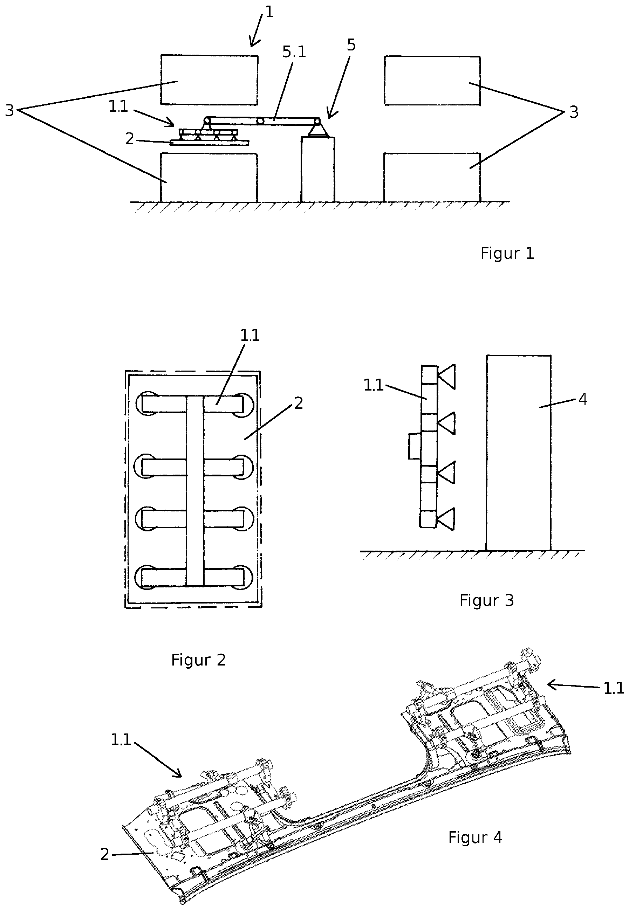

In den Figuren 1 bis 3 wird dabei zur leichteren Darstellung stark vereinfacht (und somit in Wirklichkeit unrealistisch) von einem ebenflächigen Werkstück 2 ausgegangen, das links im Bild aus einer ersten Werkzeugvorrichtung 3 herausgenommen wird, um es anschließend in eine zweite, rechts im Bild dargestellte Werkzeugvorrichtung 3 einzulegen. Bei diesen Werkzeugvorrichtungen 3 handelt es sich typischer Weise um (große) Tiefziehpressen, mit denen zum Beispiel Bleche für den Automobilbau tiefgezogen werden. Dabei wird die eingangs genannte virtuelle Umgebung außerdem vorzugsweise aus zuvor errechneten dreidimensionalen Daten der Werkzeugvorrichtung 3 erstellt. Zwischen den Werkzeugvorrichtungen 3 ist ein Roboter 5 angeordnet, d. h. die in diesem Fall (vorzugsweise) als Greifervorrichtung 1.1 ausgebildete Fertigungsgeinrichtung 1 wird wahlweise zum Entnehmen des Werkstücks 2 aus der Werkzeugvorrichtung 3 oder zum Zuführen des Werkstücks 2 in die Werkzeugvorrichtung 3 mittels eines Arms 5.1 des Roboters 5 bewegt. Alternativ kann zum Beispiel aber auch vorgesehen sein, dass die Fertigungseinrichtung 1 als Haltrahmen für das bzw. ein Werkstück 2 bei einem Schweißprozess ausgebildet ist.

Figur 4 zeigt zur Veranschaulichung ein reales Werkstück, dessen Ansatzpunkte für die Sauger der Greifervorrichtung 1.1 (wie ersichtlich) in ganz unterschiedlichen, auch schräg zueinander verlaufenden Ebenen des Werkstücks 2 angeordnet sind. Die Greifervorrichtung 1.1 wird dabei aus einer Vielzahl von an das Werkstück 2 anzupassenden, zueinander in unterschiedlichen Positionen fixierbaren Einzelteilen (insbesondere Verbindungselementen, Trägerelementen und Saugerelementen) erstellt. Ferner wird darauf hingewiesen, dass die beiden Teile der Greifervorrichtung 1.1 gemäß Figur 4 in Realität noch mit einem hier nicht dargestellten Verbindungselement miteinander verbunden ausgebildet sind.

Wesentlich für das erfindungsgemäße Verfahren ist nun, dass die virtuelle Umgebung in Ergänzung zum oben genannten, an sich bekannten Verfahren aus per Scanner erfassten, dreidimensionalen Daten einer real existierenden Fertigungseinrichtung 1 erstellt wird.

Figur 3 zeigt dabei schematisch einen solchen Scanner, insbesondere 3D-Scanner 4, wobei besonders bevorzugt ein so genannter 3D-Laserscanner zum Scannen der Fertigungseinrichtung 1 verwendet wird. Bezüglich solcher an sich bekannter Scanner wird der Einfachheit halber auf Wikipedia verwiesen, und zwar auf folgende, permanente Adresse http://de.wikipedia.org/w/index.php?title=Laserscanning&oldid=109718171, unter der folgendes offenbart ist: "Das 3D-Laserscanning liefert als Ergebnis dreidimensionale Punktwolken und somit ein vollständiges Abbild der Messszene. Anhand der Punktwolke werden entweder Einzelmaße wie z. B. Längen und Winkel bestimmt oder es wird aus ihr eine geschlossene Oberfläche aus Dreiecken konstruiert (Vermaschung oder Meshing) und zum Beispiel in der 3D-Computergrafik zur Visualisierung verwendet."

Bevor die Fertigungseinrichtung 1 gescannt wird, muss sie aber zunächst gegenständlich aufgebaut und ausjustiert werden. Wie eingangs erläutert, kann dies entweder direkt an einem vorliegenden, real existierenden Werkstück 2 (verdeutlicht durch die durchgezogenen Linien in Figur 2) oder auch anhand einer optischen, dreidimensionalen Projektion des Werkstücks 2 (verdeutlicht durch die gestrichelten Linien in Figur 2) erfolgen. Hierzu wird ein so genanntes "Cave Automatic Virtual Environment", also ein Raum zur Projektion einer dreidimensionalen Illusionswelt verwendet, wie es zum Beispiel in Wikipedia unter der permanenten Adresse http://de.wikipedia.org/w/index.-php?title=Cave_Automatic_Virtual_Environment&oldid=116809189 beschrieben ist.

Nachdem die aus vielen Einzelteilen bestehende und insofern in einer virtuellen Umgebung eines Computers nicht einfach auszujustierende Fertigungseinrichtung 1 aufgebaut und an das Werkstück 2 angepasst ist, wird sie komplett, sprich dreidimensional gescannt. Die dabei entstehenden Daten werden in ein geeignetes Datenformat umgerechnet und der virtuellen Umgebung, die bis dahin nur die Werkstückdaten und gegebenenfalls die Werkzeugvorrichtungsdaten kannte, zugeführt, so dass dann unmittelbar getestet werden kann, ob die Fertigungseinrichtung 1 den vorgegebenen Anforderungen entspricht, es also zum Beispiel beim Bewegen des Roboterarms 5.1 nicht zu Kollisionen mit den Werkzeugvorrichtungen 3 kommt.

### Bezugszeichenliste

- 1: Fertigungseinrichtung
- 1.1: Greifervorrichtung
- 2: Werkstück
- 3: Werkzeugvorrichtung
- 4: Scanner
- 5: Roboter
- 5.1: Arm des Roboters

## Patentansprüche

1. Verfahren zur Wiedergabe eines Fertigungsprozesses in einer virtuellen Umgebung, wobei während des Fertigungsprozesses eine Fertigungseinrichtung (1) und ein Werkstück (2) in Interaktion miteinander gebracht werden, wobei die virtuelle Umgebung einerseits aus zuvor errechneten dreidimensionalen Daten des Werkstücks (2) erstellt wird,
und die virtuelle Umgebung andererseits aus per Scanner erfassten, dreidimensionalen Daten einer real existierenden Fertigungseinreichtung (1) erstellt wird,
**dadurch gekennzeichnet,**
**dass** die Fertigungseinrichtung (1) vor ihrer Erfassung mit dem Scanner wahlweise an einem real existierenden Werkstück (2) oder an einer optischen Projektion des Werkstücks (2) orientiert aufgebaut wird.

2. Verfahren nach Anspruch 1,
**dadurch gekennzeichnet,**
**dass** die Fertigungseinrichtung (1) aus einer Vielzahl von an das Werkstück (2) anzupassenden, zueinander in unterschiedlichen Positionen fixierbaren Einzelteilen erstellt wird.

3. Verfahren nach Anspruch 1 oder 2,
**dadurch gekennzeichnet,**
**dass** als Scanner ein 3D-Scanner (4), insbesondere ein 3D-Laserscanner, verwendet wird.

4. Verfahren nach einem der Ansprüche 1 bis 3, wobei die Fertigungseinrichtung (1) als Greifervorrichtung (1.1) ausgebildet ist und wobei während des Fertigungsprozesses mit der Greifervorrichtung (1.1) das Werkstück (2) einer Werkzeugvorrichtung (3) zugeführt oder entnommen wird,
**dadurch gekennzeichnet,**
**dass** die virtuelle Umgebung zusätzlich aus zuvor errechneten dreidimensionalen Daten der Werkzeugvorrichtung (3) erstellt wird.

5. Verfahren nach einem der Ansprüche 1 bis 4,
**dadurch gekennzeichnet,**
**dass** die Greifervorrichtung (1.1) wahlweise zum Zuführen des Werkstücks (2) in die Werkzeugvorrichtung (3) oder zum Entnehmen des Werkstücks (2) aus der Werkzeugvorrichtung (3) mittels eines Arms (5.1) eines Roboters (5) bewegt wird.

## Claims

1. A method for reproducing a production process in a virtual environment, wherein during the production process a production device (1) and a workpiece (2) are brought into interaction with one another, wherein the virtual environment is created on the one hand from previously calculated three-dimensional data of the workpiece (2) and the virtual environment is created on the other hand from three-dimensional data of an actually existing production device (1) acquired by a scanner, **characterized in that** prior to its acquisition with the scanner the production device (1) is constructed as desired on an actually existing workpiece (2) or on an optical projection of the workpiece (2).

2. The method according to claim 1, **characterized in that** the production device (1) is created from a plurality of individual parts that are to be adapted to the workpiece (2) and which can be fixed relative to each other in various positions.

3. The method according to claim 1 or 2, **characterized in that** the scanner is a 3D scanner (4), in particular a 3D laser scanner.

4. The method according to one of claims 1 to 3, wherein the production device (1) is configured as a gripper device (1.1) and during the production process the workpiece (2) is fed to or removed from a tooling arrangement (3) by the gripper device (1.1), **characterized in that** the virtual environment is additionally created from previously computed three-dimensional data of the tooling arrangement (3).

5. The method according to one of claims 1 to 4, **characterized in that** the gripper device (1.1) is moved by means of an arm (5.1) of a robot (5) to feed the workpiece (2) to the tooling arrangement (3) or remove the workpiece (2) from the tooling arrangement (3) as desired.

## Revendications

1. Procédé pour la reproduction d'un processus de fabrication dans un environnement virtuel, dans lequel, pendant le processus de fabrication, un dispositif de fabrication (1) et une pièce (2) sont mis en interaction l'un avec l'autre, dans lequel l'environnement virtuel est créé d'une part à partir de données tridimensionnelles de la pièce (2) calculées préalablement, et l'environnement virtuel est créé d'autre part à partir de données tridimensionnelles d'un dispositif de fabrication (1) réel existant détectées à l'aide d'un scanner,
**caractérisé en ce que**
avant sa détection à l'aide du scanner, le dispositif de fabrication (1) est construit en s'appuyant au choix soit sur une pièce réelle existante (2), soit sur une projection optique de la pièce (2).

2. Procédé selon la revendication 1,
**caractérisé en ce que**
le dispositif de fabrication (1) est créé à partir d'une pluralité de pièces individuelles aptes à être fixées les unes aux autres dans différentes positions et destinées à être adaptées à la pièce (2).

3. Procédé selon la revendication 1 ou 2,
**caractérisé en ce que**
un scanner 3D (4), en particulier un scanner laser 3D, est utilisé en tant que scanner.

4. Procédé selon l'une des revendications 1 à 3, dans lequel le dispositif de fabrication (1) est conçu comme un dispositif de préhension (1.1) et dans lequel, pendant le processus de fabrication avec le dispositif de préhension (1.1), la pièce (2) est amenée vers un dispositif d'outillage (3) ou retiré de celui-ci,
**caractérisé en ce que**
l'environnement virtuel est créé en outre à partir de données tridimensionnelles du dispositif d'outillage (3) calculées préalablement.

5. Procédé selon l'une des revendications 1 à 4,
**caractérisé en ce que**
le dispositif de préhension (1.1) est déplacé à l'aide d'un bras (5.1) d'un robot (5) sélectivement pour amener la pièce (2) dans le dispositif d'outillage (3) ou pour retirer la pièce (2) du dispositif d'outillage (3).
